# EUROPEAN PATENT SPECIFICATION

(11) **EP 1 930 620 B1**
(45) Date of publication and mention of the grant of the patent: **01.05.2013**
(21) Application number: 07023596.5
(22) Date of filing: 05.12.2007
(51) Int. Cl.: F16F 7/01, F16F 9/00, F16F 9/06, F16F 9/32, F16F 9/36, F16F 7/10, F16F 9/53

(54) **Hydraulic shock absorber**
Hydraulischer Stoßdämpfer
Amortisseur hydraulique

(30) Priority: 06.12.2006 JP 2006330033
(43) Date of publication of application: 11.06.2008
(73) Proprietor: Yamaha Hatsudoki Kabushiki Kaisha, Shizuoka-ken Shizuoka 438-8501 (JP)
(72) Inventor: Sakai, Kouji, Iwata-shi Shizuoka 438-8501 (JP); Kawai, Takashi, Iwata-shi Shizuoka 438-8501 (JP); Onda, Naoki, Iwata-shi Shizuoka 438-8501 (JP)
(74) Representative: Grünecker, Kinkeldey, Stockmair & Schwanhäusser

(56) References cited:
- EP-A2- 1 936 214
- DE-A1- 19 813 578
- GB-A- 1 280 301
- JP-A- 2003 166 579
- SU-A1- 1 017 852
- US-A- 5 027 715

## Description

The present invention relates to a hydraulic shock absorber as per the preamble of claim 1 in which damping force is generate according to a flow of hydraulic oil, and in particular relates to a hydraulic shock absorber in which other damping force is generated according to a flow of a flowable matter such as granular material other than the hydraulic oil in addition to the generation of the damping force.

A conventional hydraulic shock absorber of a kind described above is disclosed in Patent Document 1 described below. According to the official gazette, the shock absorber includes a cylinder tube, a piston fitted slidably in an axial direction in the cylinder tube and defining an inside of the cylinder tube into a first and a second oil chambers, a piston rod extending from the piston to an outside of the cylinder tube, a damping force generation section which can generate damping force by making hydraulic oil flow between the first and the second oil chambers, and a dynamic damper supported by the piston rod in the oil chamber. The dynamic damper is attached to the piston rod and has an elastic body made of rubber projecting outward in the radial direction of the piston rod and a weight attached to a projected end of the elastic body.

When impact force is applied from an outside in the axial direction to the shock absorber having a constitution described above, the shock absorber is expanded or compressed. Accordingly, the hydraulic oil in the shock absorber passes through the damping force generation section to flow between the first and the second oil chambers. As a result, damping force is generated, and the impact force is damped.

On the other hand, when the impact force is applied to the shock absorber as described above, vibration of a high frequency and a micro amplitude is generated in the shock absorber. This vibration is suppressed by the dynamic damper. It is said that the impact force is effectively damped as a result.
Patent Document 1: JP-A-2003-166579

However, the conventional art described above has a problem described below.

Firstly, in general, the dynamic damper can efficiently suppress vibration in a certain frequency range generated in the shock absorber. Consequently, if vibration out of the frequency range is generated in the shock absorber, vibration suppression expected from the dynamic damper may result even in an adverse effect.

Secondly, in general, an elastic body made of rubber is easily deteriorated over time. Consequently, there may be a problem regarding a lifetime in which a vibration suppression characteristic is deteriorated at an early stage because of deterioration of the elastic body of the dynamic damper.

Thirdly, since the dynamic damper is provided in the oil chamber of the cylinder tube, it is necessary to elongate length in the axial direction of the cylinder tube because it is necessary to secure a space in the oil chamber occupied by the dynamic damper. Therefore, the shock absorber tends to become large. As a result, when it is attempted to assemble the shock absorber to a body of a vehicle or the like, a large assembly space is required, and its assembly work may become complicated. In other words, the shock absorber of a large scale may impede assembly performance to a vehicle having a narrow extra space or the like.

An object of the present invention made in view of such drawbacks described above is to damp impact force applied to a shock absorber more effectively.

This objective is solved in an inventive manner by a hydraulic shock absorber, comprising: a cylinder tube; a piston fitted slidably in an axial direction in the cylinder tube for defining an inside of the cylinder tube into first and second chambers; a piston rod extending from the piston to an outside of the cylinder tube; and a damping force generation section capable of generating a damping force by making hydraulic liquid flow between the first and the second chambers; wherein at least one cavity is formed in at least either one of the cylinder tube and the piston rod, and wherein flowable matter having a rheological characteristic is sealed in the at least one cavity.

With such shock absorber, the lifetime of the shock absorber is further improved. Moreover, excellent assembly performance of the shock absorber in a vehicle or the like is maintained by avoiding enlarging the shock absorber regardless of the fact that the shock absorber can effectively damp impact force as described above.

Preferably, the cavity is formed in the piston rod, and an opening which makes it possible to remove the flowable matter from the cavity and to fill the flowable matter into the cavity is formed at an extended end of the piston rod.

Further, preferably the flowable matter sealed in the cavity is pressurized. Alternatively, the flowable matter may be incompletely filled in the cavity in order to maintain a space at an upper end of the cavity.

Yet further preferably the flowable matter is granular fluid.

Further, it is beneficial if the flowable matter includes at least either substance of granular fluid and liquid having a small absolute specific gravity, together with a granular fluid having an absolute specific gravity larger than that of the preceding substance.

Further, it is beneficial if the flowable matter includes granular fluid, and the granular fluid is made by mixing grains having different grain diameters.

Still further, it is beneficial if the flowable matter includes granular fluid, and surface treatment is performed in order to adjust a coefficient of friction of a surface of each grain constituting the granular fluid.

Beneficially, adsorptive power is generated respectively between components of the flowable matter, or adsorptive power is generated respectively between the flowable matter and an inner surface of the cavity.

In the following, the present invention is explained in greater detail with respect to several embodiments thereof in conjunction with the accompanying drawings, wherein:
- FIG. 1: shows the embodiment 1 and is a vertical cross-sectional view of the shock absorber,
- FIG. 2: shows the embodiment 2 and is a view equivalent to FIG. 1,
- FIG. 3: shows the embodiment 2 and is a partical enlarged view of FIG. 2,
- FIG. 4: shows the embodiment 3 and is a view equivalent to FIG. 1,
- FIG. 5: shows the embodiment 4 and is a view equivalent to FIG. 1, and
- FIG. 6: shows the embodiment 4 and is a cross-sectional view taken along arrows VI-VI in FIG. 5.

### Description of Reference Numerals and Symbols:

1: shock absorber
2: cylinder tube
3: axial center
4: tube main body
13: free piston
14: hydraulic oil
15: oil chamber
16: gas chamber
18: piston
19: first oil chamber
20: second oil chamber
21: piston rod
22: base end
26: expansion side damping force generation section
30: compression side damping force generation section
38: cavity
39: opening
41: lid
44: flowable matter
45: elastic body
48: through hole
49: movable rod guide
56: piston rod
69: cavity
72: lid
74: space
76: inner tube main body
77: outer tube main body
83: opening
A: expanding operation
B: compressing operation

Objects of the present teaching in relation to the shock absorber include damping impact force applied to the shock absorber more effectively, further improving a lifetime of the shock absorber, and maintaining excellent assembly performance of the shock absorber to a vehicle or the like by avoiding enlarging the shock absorber regardless of the fact that the shock absorber can effectively damp impact force as described above. A best mode for carrying out the present invention for achieving these objects is as described below.

The shock absorber includes: a cylinder tube; a piston fitted slidably in an axial direction in the cylinder tube defining an inside of the cylinder tube into a first and a second oil chambers; a piston rod extending from the piston to an outside of the cylinder tube; and a damping force generation section capable of generating damping force by making hydraulic oil flow between the first and the second oil chambers. A cavity is formed in a member of at least either one of the cylinder tube and the piston rod, and a flowable matter having a rheological characteristic is sealed in the cavity.

### Embodiment 1

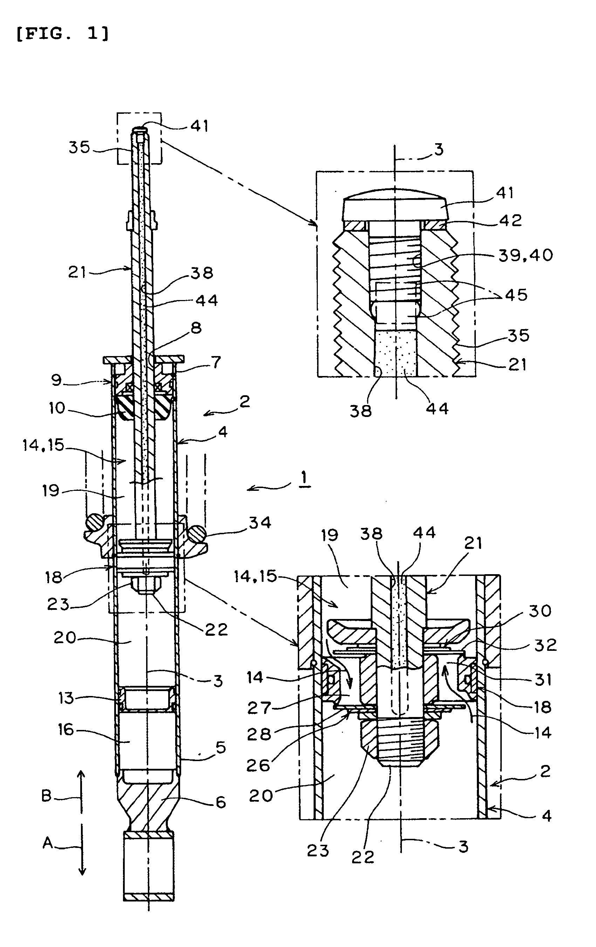

In order to describe the present teaching in more detail, an embodiment 1 will be described hereinafter with reference to the attached FIG. 1.

In FIG. 1, a reference numeral 1 denotes a hydraulic shock absorber. The shock absorber 1 is applied to a suspension system, a steering damper, and the like of a vehicle such as an automobile and a motorcycle.

The shock absorber 1 is provided with the cylinder tube 2. The cylinder tube 2 is provided with a tube main body 4 positioned on an axial center 3 of the cylinder tube 2 and extending in the axial direction, a head cover 6 fixed on one end 5 so as to close an opening of the end 5 in the axial direction of the tube main body 4, a fixing rod guide 9 fixed on the other end 7 so as to close an opening of the end 7 of the tube main body 4 and having a through hole 8 formed on the axial center 3, and a bump stopper 10 attached to the fixing rod guide 9 and projecting toward the inside of the tube main body 4.

A free piston 13 is provided in the cylinder tube 2 and fitted slidably in the axial direction. The free piston 13 defines an inside of the cylinder tube 2 into an oil chamber 15 in which hydraulic oil 14 is filled and a gas chamber 16 in which high-pressure nitrogen gas is filled. In addition, the piston 18 is provided to be fitted in the oil chamber 15 of the cylinder tube 2 slidably in the axial direction. The piston 18 defines the oil chamber 15 into the first oil chamber 19 and the second oil chamber 20.

The piston rod 21 positioned on the axial center 3, extending from the piston 18, passing through the through hole 8 of the fixing rod guide 9, and reaching an outside of the cylinder tube 2 is provided. A base end 22 of the piston rod 21 passes through the piston 18, and the piston 18 and the base end 22 are fixed on each other by a fastener 23.

The expansion side damping force generation section 26 is provided, which generates damping force by making the hydraulic oil 14 flow from the first oil chamber 19 to the second oil chamber 20 when the shock absorber 1 performs an expanding operation A. The expansion side damping force generation section 26 is provided with an expansion side oil passage 27 formed in the piston 18 so as to connect the first oil chamber 19 and the second oil chamber 20 and an expansion side damping valve 28 as a leaf valve for separating the expansion side oil passage 27 from a side of the second oil chamber 20 elastically in an openable and closable manner.

On the other hand, the compression side damping force generation section 30 is provided, which generates damping force by making the hydraulic oil 14 flow from the second oil chamber 20 to the first oil chamber 19 when the shock absorber 1 performs a compressing operation B. The compression side damping force generation section 30 is provided with a compression side oil passage 31 formed in the piston 18 so as to connect the first oil chamber 19 and the second oil chamber 20 and a compression side damping valve 32 as a leaf valve for separating the compression side oil passage 31 from a side of the first oil chamber 19 elastically in an openable and closable manner.

An external thread 35 is formed on an outer circumference of the extended end of the piston rod 21 of the cylinder tube 2, and the extended end of the piston rod 21 is supported on a side of the vehicle body. On the other hand, the head cover 6 of the cylinder tube 2 is connected to a side of a wheel. A suspension spring 34 for biasing the cylinder tube 2 in order to make the shock absorber 1 perform the expanding operation A is provided.

The cavity 38 having a bottom is formed in a member of the piston rod 21 in the shock absorber 1 having a constitution described above. The cavity 38 is formed on the axial center 3 of the piston rod 21 and has a circular cross-section. A bottom on a side of one end of the cavity 38 is positioned at the base end 22 of the piston rod 21, and the other end of the cavity 38 is the opening 39 opened from an end surface of the extended end of the piston rod 21 to the external force.

An internal thread 40 is formed on an inner circumference of the opening 39. The opening 39 is closed openably by a lid 41 in a shape of a bolt screwed into internal thread 40. In addition, a seal 42 is interposed between the end surface of the extended end of the piston rod 21 and the lid 41.

The flowable matter 44 is fillingly sealed in the cavity 38. When the lid 41 is twistedly turned to open the opening 39, the flowable matter 44 can be removed or filled in relation to the cavity 38 via the opening 39. In addition, an elastic body 45 made of rubber is removably fitted in the opening 39. The elastic body 45 is compressed elastically by screwing the lid 41. In addition, the flowable matter 44 enclosed in the cavity 38 is pressurized by the elastic body 45.

A substance having a rheological characteristic is used as the flowable matter 44. Rheology is "the study of the deformation and flow of a material." Familiar liquid such as water and alcohol is subsequently understood as Newtonian fluid having a characteristic in which shear rate and shear stress are proportional to each other. On the other hand, the rheological characteristic refers to a characteristic of non-Newtonian fluid, in which no simple proportional relation is seen between shear rate and shear stress in a flow of matter having flowability in a broad sense including fine particles (including grains) and the like of inorganic matters such as a plastic solid matter and sand.

More particularly major substances which can be the flowable matter 44 having the rheological characteristic are as follows.

The major substances include granular fluid classified on the basis of a nonlinear relation between shear rate and shear stress (sand and the like), dilatant fluid (a mixture of starch as a high viscosity material and water, a mixture of sand and water in an appropriate combination, and the like), pseudoplastic fluid (suspension or emulsion such as a solution or a melt of a high molecular material, starch paste, and cellulose ester and the like), and Bingham fluid (clay slurry, asphalt, paint, grease, and the like).

In addition, the major substances also include thixotropy fluid and rheopexy fluid (gypsum suspension and bentonite suspension, high-temperature bentonite grease of a non-soap type) having time hysteresis concerning the nonlinear relation between shear rate and shear stress, and visco-elastic fluid showing an elastic behavior in addition to a viscous behavior in relation to a shear strain (a concentrated solution and a melt of a polymer), and the like.

In the embodiment, sand as granular fluid is solely used as the flowable matter 44.

When the vehicle is running, impact force may be applied from an outside in the axial direction to the shock absorber 1, and therefore the shock absorber 1 may perform the expanding operation A in the direction of the bias of the suspension spring 34. In this case, the hydraulic oil 14 in the first oil chamber 19 starts to flow toward the second oil chamber 20, passing through the expansion side oil passage 27 in the expansion side damping force generation section 26. Accordingly, the expansion side damping valve 28 causes elastic deformation and opens the valve due to oil pressure of the hydraulic oil 14 in the first oil chamber 19, which is larger than the elastic bias of the expansion side damping valve 28. As a result, the hydraulic oil 14 flows in the expansion side oil passage 27 slightly opened. Consequently, damping force is generated, and the impact force is damped.

On the other hand, the shock absorber 1 may perform the compressing operation B in resistance to the bias of the suspension spring 34 by the impact force. In this case, the hydraulic oil 14 in the second oil chamber 20 starts to flow toward the first oil chamber 19, passing through the compression side oil passage 31 in the compression side damping force generation section 30. Accordingly, the compression side damping valve 32 causes elastic deformation and opens the valve due to oil pressure of the hydraulic oil 14 in the second oil chamber 20, which is larger than the elastic bias of the compression side damping valve 32. As a result, the hydraulic oil 14 flows in the compression side oil passage 31 slightly opened. Consequently, damping force is generated, and the impact force is damped.

After this, the shock absorber 1 performs the expanding operation A and the compressing operation B repeatedly. As a result, the impact force is damped. As the shock absorber 1 performs the expanding operation A and the compressing operation B, the piston rod 21 moves in to or out of the oil chamber 15. On this occasion, since the volume of the hydraulic oil 14 of an incompressible type in the oil chamber 15 is constant, the free piston 13 slides in the axial direction as much as the volume of the piston rod 21 moving in to or out of the oil chamber 15 as described above. As a result, gas in the gas chamber 16 is expanded and compressed. Consequently, the piston rod 21 can move in to or out of the oil chamber 15.

In addition, when impact force is applied to the shock absorber 1, vibration of a high frequency and a micro amplitude is generated in the axial direction of the shock absorber 1. This vibration is suppressed by the flowable matter 44. Specifically, "deformation resistance" (viscous resistance, frictional resistance, and the like) is generated in the flowable matter 44 by vibration generated in the shock absorber 1, and further "deformation resistance" (see the above) of the flowable matter 44 is also generated in relation to an inner wall surface of the cavity 38. Consequently, the vibration is suppressed by generation of the "deformation resistance" of the flowable matter 44. Moreover, the flowable matter 44 can efficiently suppress vibration in a wider frequency range in comparison with the dynamic damper according to the conventional art. Consequently, the vibration is suppressed more surely.

In other words, according to the shock absorber 1, impact force applied to the shock absorber 1 is damped by the expansion side damping force generation section 26 and the compression side damping force generation section 30, and vibration of a high frequency in a wide range and a micro amplitude generated in the shock absorber 1 by the impact force is more surely suppressed by the flowable matter 44. Therefore, the impact force is damped more effectively. As a result, ride comfort and quietness of the vehicle are improved.

Further, in general, the flowable matter 44 is not easily deteriorated over time in comparison with the elastic body made of rubber in the dynamic damper according to the conventional art. Consequently, it is suppressed that a vibration suppression characteristic of the flowable matter 44 is deteriorated at an early stage. As a result, improvement of a lifetime of the shock absorber 1 is achieved.

Moreover, the flowable matter 44 is sealed in the cavity 38 formed in the member of the piston rod 21. In other words, the flowable matter 44 is provided by utilizing an inside of the member of the piston rod 21. Therefore, it can be prevented that the shock absorber 1 is enlarged by the fact that the flowable matter 44 is provided. As a result, excellent assembly performance of the shock absorber 1 in relation to a vehicle or the like can be maintained by avoiding enlarging the shock absorber 1 regardless of the fact that the shock absorber 1 can effectively damp impact force as described above.

In addition, as described above, the cavity 38 is formed in the member of the piston rod 21, and the opening 39 which makes it possible to remove or fill the flowable matter 44 to the cavity 38 is formed at the extended end of the piston rod 21.

Consequently, it is possible to remove or fill the flowable matter 44 in relation to the cavity 38 from the opening 39 outside the cylinder tube 2. As a result, it is possible to change or adjust a type or an amount of the flowable matter 44 easily and conveniently without disassembling the shock absorber 1.

In addition, the opening 39 is formed at the extended end of the piston rod 21. Therefore, when a seal is applied a case that the opening 39 is closed by the lid 41, it is not necessary to take the hydraulic oil 14 into consideration. It is only necessary to consider a seal between a side of atmospheric air and a side in the cavity 38. Consequently, the shock absorber 1 can be easily formed. Further, because a leak does not occur respectively between the hydraulic oil 14 and the flowable matter 44 in the cavity 38, reliability of the seal is enhanced.

Further in addition, as described above, the flowable matter 44 sealed in the cavity 38 is pressurized.

Consequently, in particular, when the flowable matter 44 is granular fluid, cohesion of each grain in the granular fluid is increased. Consequently, "deformation resistance" in the flowable matter 44 generated by the impact force is more frequently generated, and vibration generated in the shock absorber 1 by the impact force is suppressed more effectively.

Moreover, as described above, the flowable matter 44 is granular fluid.

Typically, the granular fluid is sand. Further, the granular fluid can be easily handled, for example, when filled in the cavity 38. In addition, a desired characteristic can be obtained relatively easily. Consequently, as the flowable matter 44 is the granular fluid, the shock absorber 1 can be easily formed.

As described above, sand as granular fluid is solely used as the flowable matter 44. However, another constitution is possible as described below.

The flowable matter 44 includes at least either substance of granular fluid and liquid having a small absolute specific gravity and granular fluid having an absolute specific gravity larger than that of the preceding substance.

In this constitution, when the flowable matter 44 vibrates with the shock absorber 1 due to the impact force, the "deformation resistance" in the flowable matter 44 is further more frequently generated because of difference in inertial force caused by difference in the absolute specific gravity between the substances. As a result, vibration generated in the shock absorber 1 by the impact force is suppressed further more effectively.

Further in addition, the flowable matter 44 can include granular fluid, and the granular fluid can be made by mixing grains having different grain diameters.

In this constitution, a grain having a small grain diameter enters a space produced between grains having a large grain diameter. Therefore, a contact area between these grains and a contact area between an inner surface of the cavity 38 and the flowable matter 44 become larger. Consequently, the "deformation resistance" in the flowable matter 44 generated by the impact force is further more frequently generated, and vibration generated in the shock absorber 1 by the impact force is suppressed further more effectively.

Moreover, when the flowable matter 44 vibrates with the shock absorber 1 due to the impact force, the "deformation resistance" in the flowable matter 44 is further more frequently generated because of difference in inertial force caused by difference between the grain diameters of the grains. As a result, vibration generated in the shock absorber 1 by the impact force is suppressed further more effectively.

Further, the flowable matter 44 may include granular fluid, and surface treatment may be performed in order to adjust a coefficient of friction of a surface of each grain constituting the granular fluid.

In this case, the surface treatment is made to cause the surface of the grain to be rough in a grinding process by shot peening. In addition, the surface of the grain is coated with a resin material or an inorganic material. For instance, a surface of sand as a core is coated with a ceramics layer by vapor deposition and sputtering.

In this constitution, a coefficient of friction of each grain in the granular fluid is set to a desired value. Accordingly, an amount of the "deformation resistance" in the flowable matter 44 generated by the impact force can be made to be appropriate. In addition, if rigidity of a surface of each grain is enhanced by the surface treatment, deterioration over time of the flowable matter 44 can be prevented, and improvement of a lifetime is achieved.

Moreover, adsorptive power may be generated respectively between components of the flowable matter 44, or adsorptive power may be generated respectively between the flowable matter 44 and an inner surface of the cavities 38 and 69.

In this case, specifically, the tube main body 4 and of the cylinder tube 2 and the piston rod 21 is made of steel as a ferromagnetic material or the like. On the other hand, the flowable matter 44 is magnetized ferrite powder or the like.

In this constitution, because adsorptive power is generated respectively between components of the flowable matter 44 and between the flowable matter 44 and an inner surface of the cavity 38, each friction force is increased. Consequently, an amount of "deformation resistance" in the flowable matter 44 generated by the impact force can be made to be larger.

In addition, when the shock absorber 1 is vibrated, a state of each adsorption due to the adsorptive power and a state of separation in which the state of the adsorption is released by the vibration are repeated. Accordingly, abrupt internal agitation is generated in the flowable matter 44. Consequently, the "deformation resistance" in the flowable matter 44 is further more frequently generated. As a result, vibration generated in the shock absorber 1 by the impact force is suppressed further more effectively.

The description above is based on the example shown in the drawing. However, the shock absorber 1 can be applied to an industrial machine and the like. Further, the expansion side damping force generation section 26 and the compression side damping force generation section 30 may be provided outside the cylinder tube 2 or may be formed in a material of the cylinder tube 2 (inside the material by increasing wall thickness). Still further, the elastic body 45 may not be provided, and the flowable matter 44 may be pressurized by some means after the opening 39 is closed by the lid 41.

In addition, a rheological flow characteristic can be effectively utilized in order to generate damping force having a characteristic not obtained solely by adjusting viscosity of Newtonian fluid depending on nonlinearity of viscosity, time irreversibility, and the like.

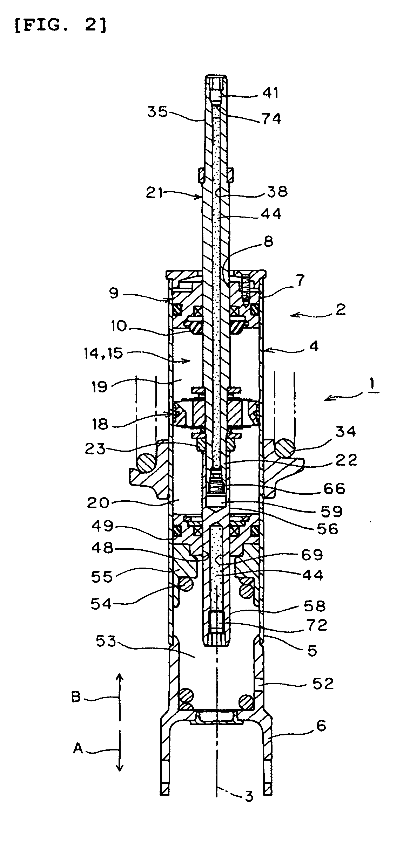

FIGs. 2 to 6 show embodiments 2 to 4. These embodiments have many in common with the embodiment 1 in relation to a constitution and an operation effect. Therefore, common reference numerals will be given to the drawings, the descriptions will not be repeated concerning things in common, and different points will be mainly described. In addition, a constitution of each part in these embodiments may be variously combined in accordance with an object and an operation effect of the present teaching.

### Embodiment 2

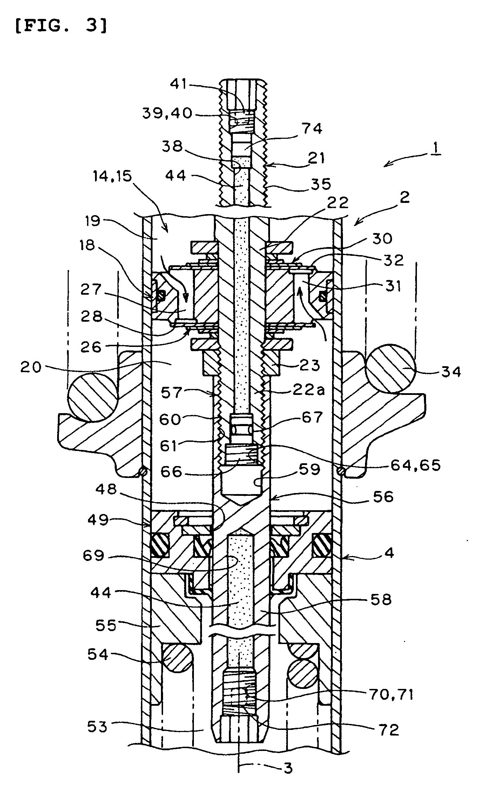

In order to describe the present teaching in more detail, an embodiment 2 will be described hereinafter with reference to FIGs. 2 and 3.

In FIGs. 2 and 3, the shock absorber 1 in the embodiment 2 is of a so-called through rod (double rod) type. Areas under oil pressure of the hydraulic oil 14 on surfaces in the axial direction of the piston 18 in the shock absorber 1 have generally the same dimensions.

Specifically, a movable rod guide 49 through which a through hole 48 is formed on the axial center 3 is provided in place of the free piston 13 of the embodiment 1. The movable rod guide 49 is fitted in the tube main body 4 of the cylinder tube 2 slidably in the axial direction. Further, a housing chamber 53 passing through a connection hole 52 formed in the head cover 6 and connected to the atmosphere is formed in place of the gas chamber 16 of the embodiment 1. The housing chamber 53 is formed with one end 5 of the tube main body 4 and the head cover 6. A spring 54 elastically pushing the movable rod guide 49 toward a side of the oil chamber 15 is housed in the housing chamber 53. A prescribed amount of pressure is constantly applied to the hydraulic oil 14 in the oil chamber 15 by a bias of the spring 54.

A slider 55 in a shape of a cylinder in which a through hole is formed on the axial center 3 is interposed between the movable rod guide 49 and the spring 54. The slider 55 is fitted slidably in the axial direction without any rattle in the tube main body 4. One end surface (an upper end surface) in the axial direction of the slider 55 is formed to be orthogonal to the axial center 3 and is facingly in contact with one end surface (a lower end surface) in the axial direction of the movable rod guide 49.

One end surface (an upper end surface) in the axial direction of the spring 54 pressed on an other end surface (a lower end surface) of the slider 55 in a free state of the spring 54 may be somewhat inclined in relation to an orthogonal surface concerning the axial center. Even so, it is prevented that the slider 55 starts to incline in relation to the axial center 3 under the influence of the bias of the spring 54. Consequently, it is also prevented that the movable rod guide 49 facingly in contact with the one end surface of the slider 55 starts to incline in relation to the axial center 3 under the influence of the bias of the spring 54. As a result, a smooth slide of the movable rod guide 49 to the tube main body 4 is secured.

The other piston rod 56 positioned on the axial center 3, extending from the piston 18, passing through the through hole 48, and reaching the housing chamber 53 is provided. The piston rod 56 is provided with the base end 22 of the piston rod 21 fixed on the piston 18 and a rod main body 58 fixed on a projected end 22a of the base end 22 projecting from the piston 18 to the second oil chamber 20 by a fastener 57. In other words, the base end 22 is shared by the piston rods 21 and 56. Diameters of the piston rods 21 and 56 are generally the same.

As described above, the piston rods 21 and 56 having generally the same diameter are extended from each surface in the axial direction of the piston 18. Accordingly, as described above, the areas under oil pressure on the surfaces in the axial direction of the piston 18 have generally the same dimensions. As a result, it is suppressed that the piston 18 receives pressurizing reaction force from the spring 54.

A fitting hole 59 having a bottom is formed at a base end of the rod main body 58 on the axial center 3. The fastener 57 is provided with an external thread 60 formed on an outer circumference of the projected end 22a of the base end 22 and an internal thread 61 formed on an inner circumference of the fitting hole 59. The fitting hole 59 of the rod main body 58 is fitted with the projected end 22a of the base end 22, and the external thread 60 and the internal thread 61 are screwed. Consequently, a bottom section in the fitting hole 59 is a space enclosed by the projected end 22a of the base end 22.

The cavity 38 passes through the projected end 22a of the base end 22, further passes through an other opening 64 formed in the projected end 22a, and is opened to a bottom in the fitting hole 59. An internal thread 65 is formed on an inner circumference of the other opening 64. The other opening 64 is closed openably by a lid 66 in a shape of a bolt screwed with the internal thread 65. In addition, a seal 67 is interposed between the inner circumference of the opening 64 and the lid 66.

An other cavity 69 having a bottom is formed in a member of the rod main body 58 in the other piston rod 56. The other cavity 69 is formed on the axial center 3 of the piston rod 56. The other cavity 69 has a circular cross-section, and its diameter is larger than that of the cavity 38. In addition, an opening 70 which opens the other cavity 69 to the housing chamber 53 is formed at an extended end of the other piston rod 56.

An internal thread 71 is formed on an inner circumference of the opening 70. The opening 70 is closed openably by a lid 72 in a shape of a bolt screwed with the internal thread 71. In addition, a seal (not shown) is provided between the inner circumference of the opening 70 and the lid 72. Sand as granular fluid belonging to the flowable matter 44 is fillingly sealed in the cavity 69.

When the shock absorber 1 is in a static state, the flowable matter 44 is incompletely filled in the cavity 38 of the piston rod 21 so as to maintain the space 74 at an upper end of the cavity 38. Even if the cavity 38 is fully filled with the flowable matter 44 at a time when the flowable matter 44 is injected, the cavity 38 may be incompletely filled with the flowable matter 44 as described above after a certain period of time elapses in a case that the flowable matter 44 is granular fluid. Specifically, even if the flowable matter 44 is fully enclosed in the cavity 38, each grain of the granular fluid sinks as time passes because of its own weight. Accordingly, since apparent specific gravity of the granular fluid is gradually increased, the space 74 may be generated at the upper end of the cavity 38.

In the constitution described above, when the flowable matter 44 vibrates with the shock absorber 1 due to the impact force, fluidization of the flowable matter 44 in the cavity 69 is accelerated by the space 74 provided as described above. As a result, the "deformation resistance" in the flowable matter 44 generated by the impact force is more frequently generated, and vibration generated in the shock absorber 1 by the impact force is suppressed more effectively.

### Embodiment 3

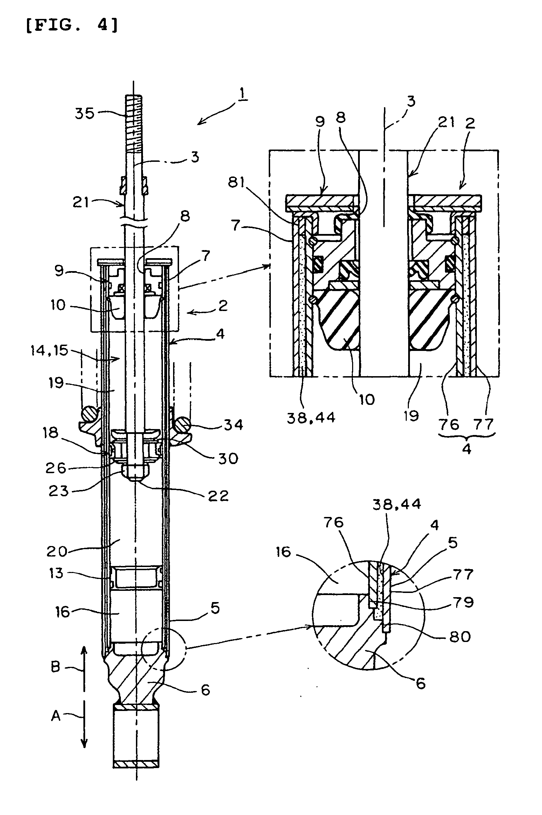

In order to describe the present teaching in detail, an embodiment 3 will be described hereinafter with reference to FIG. 4.

In FIG. 4, the tube main body 4 of the cylinder tube 2 is constituted with a multiple tube made with an inner and an outer tube main bodies 76 and 77. An outer circumference of the head cover 6 has a small diameter section 79 and a large diameter section 80, and the small and the large diameter sections 79 and 80 are positionally shifted from each other. An end of the inner tube main body 76 is externally fitted and fixed with the small diameter section 79, and an end of the outer tube main body 77 is externally fitted with the large diameter section 80. On the other hand, a spacer 81 in a shape of a ring is interposed between the inner and the outer tube main bodies 76 and 77 at the other end 7 of the tube main body 4.

Further, the cavity 38 in a shape of a cylinder is formed between the inner and the outer tube main bodies 76 and 77, and the flowable matter 44 is sealed in the cavity 38. An effect by the cavity 38 and the flowable matter 44 is the same as that of the preceding embodiment.

### Embodiment 4

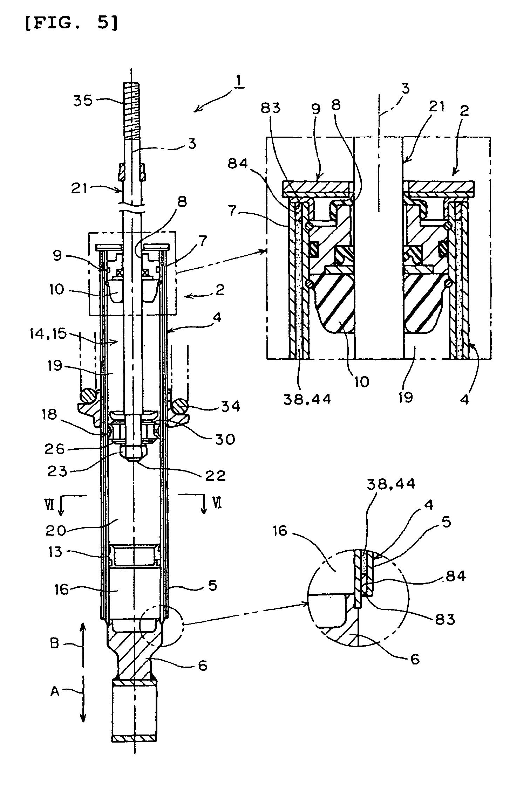

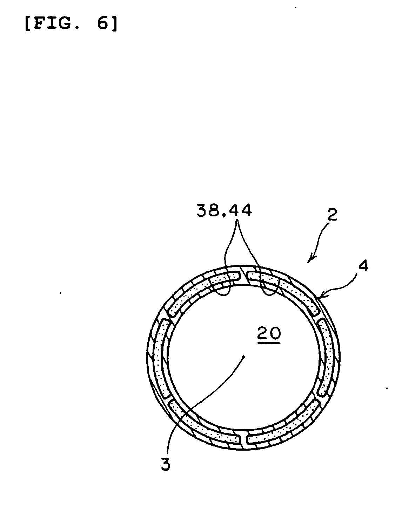

In order to describe the present teaching in detail, an embodiment 4 will be described hereinafter with reference to FIGs. 5 and 6.

In FIGs. 5 and 6, the tube main body 4 of the cylinder tube 2 is formed by extrusion. A plurality of the cavities 38 (six cavities) passing through a member of the tube main body 4 in the axial direction are formed. Cross-sections of the cavities 38 forms a circular arc with the axial center 3 at the center, and each cross-section is in the same shape and of the same size and disposed at a regular pitch in the direction of a circumference around the axial center 3. A stopper 84 closing an opening 83 of each end in the longitudinal direction of each cavity 38 is provided.

A first embodiment of the present teaching provides a hydraulic shock absorber including: a cylinder tube 2; a piston 18 fitted slidably in an axial direction in the cylinder tube 2 for defining an inside of the cylinder tube 2 into a first and a second oil chambers 19 and 20; a piston rod 21 extending from the piston 18 to an outside of the cylinder tube 2; and damping force generation sections 26 and 30 capable of generating damping force by making hydraulic oil 14 flow between the first and the second oil chambers 19 and 20; in which cavities 38 and 69 are formed in a member at least one of the cylinder tube 2, the piston rod 21, and a piston rod 56, and flowable matter 44 having a rheological characteristic is sealed in the cavities 38 and 69.

According to a second embodiment of the present teaching, in addition to the first embodiment of the present teaching, the cavities 38 and 69 are formed in a member of the piston rod 21, and an opening 39 which makes it possible to remove or fill the flowable matter 44 to the cavities 38 and 69 is formed at an extended end of the piston rod 21.

According to a third embodiment of the present teaching, in addition to the first or second embodiment of the present teaching, the flowable matter 44 sealed in the cavities 38 and 69 is pressurized.

According to a fourth embodiment of the present teaching, in addition to the first to third embodiments of the present teaching, the flowable matter 44 is granular fluid.

According to a fifth embodiment of the present teaching, in addition to the first to fourth embodiments of the present teaching, the flowable matter 44 includes at least either substance of granular fluid and liquid having a small absolute specific gravity and granular fluid having an absolute specific gravity larger than that of the preceding substance.

According to a sixth embodiment of the present teaching, in addition to the first to fifth embodiments of the present teaching, the flowable matter 44 includes granular fluid, and the granular fluid is made by mixing grains having different grain diameters.

According to a seventh embodiment of the present teaching, in addition to the first to sixth embodiments of the present teaching, the flowable matter 44 includes granular fluid, and surface treatment is performed in order to adjust a coefficient of friction of a surface of each grain constituting the granular fluid.

According to an eighth embodiment of the present teaching, in addition to the first to seventh embodiments of the present teaching, adsorptive power is generated respectively between components of the flowable matter 44, or adsorptive power is generated respectively between the flowable matter 44 and an inner surface of the cavities 38 and 69.

According to a ninth embodiment of the present teaching, in addition to the first to eighth embodiments of the present teaching, the flowable matter 44 is incompletely filled in the cavities 38 and 69 in order to maintain a space 74 at an upper end of the cavities 38 and 69.

An effect of the present teaching will be described hereinafter.

According to a first embodiment of the present teaching, there is provided the hydraulic shock absorber including: a cylinder tube; a piston fitted slidably in an axial direction in the cylinder tube and defining an inside of the cylinder tube into a first and a second oil chambers; a piston rod extending from the piston to an outside of the cylinder tube; for a damping force generation section capable of generating damping force by making hydraulic oil flow between the first and the second oil chambers; in which a cavity is formed in a member of at least either one of the cylinder tube and the piston rod, and flowable matter having a rheological characteristic is enclosed in the cavity.

Consequently, when impact force is applied from an outside to the shock absorber, the shock absorber is expanded or compressed. As a result, damping force is generated by the fact that the hydraulic oil flows in the damping force generation section, and the impact force is damped.

In addition, when impact force is applied to the shock absorber, vibration of a high frequency and a micro amplitude is generated in the shock absorber. This vibration is suppressed by the flowable matter. Specifically, "deformation resistance" (viscous resistance, frictional resistance, and the like) is generated in the flowable matter by vibration generated in the shock absorber, and further "deformation resistance" (see above) of the flowable matter is also generated to an inner surface of the cavity. Consequently, the vibration is suppressed by generation of the "deformation resistance" of the flowable matter. Moreover, the flowable matter can efficiently suppress vibration in a wider frequency range in comparison with the dynamic damper according to the conventional art. As a result, the vibration is suppressed more surely.

Specifically, according to the shock absorber, impact force applied to the shock absorber is damped by the damping force generation section, and vibration of a high frequency in a wide range and a micro amplitude generated in the shock absorber by the impact force is more surely suppressed by the flowable matter. As a result, the impact force is damped more effectively.

Further, in general, the flowable matter is not easily deteriorated over time in comparison with the elastic body made of rubber in the dynamic damper according to the conventional art. Consequently, it is suppressed that a vibration suppression characteristic of the flowable matter is deteriorated at an early stage. As a result, improvement of a lifetime of the shock absorber is achieved.

Moreover, the flowable matter is sealed in the cavity formed in the member of the cylinder tube and the piston rod. In other words, the flowable matter is provided by utilizing an inside of the member of the cylinder tube and the piston rod. Therefore, it can be prevented that the shock absorber is enlarged by the fact that the flowable matter is provided. As a result, excellent assembly performance of the shock absorber to a vehicle or the like can be maintained by avoiding enlarging the shock absorber regardless of the fact that the shock absorber can effectively damp impact force as described above.

According to the second embodiment of the present teaching, the cavity is formed in a member of the piston rod, and the opening which makes it possible to remove or fill the flowable matter to the cavity is formed at an extended end of the piston rod.

Consequently, it is possible to remove or fill the flowable matter to the cavity from the opening outside the cylinder tube. As a result, it is possible to change or adjust a type or an amount of the flowable matter easily and conveniently without disassembling the shock absorber.

Further, the opening is formed at the extended end of the piston rod. Therefore, when a seal is applied in order to close the opening, it is not necessary to take the hydraulic oil into consideration. It is only necessary to consider a seal between a side of atmospheric air and a side in the cavity. As a result, the shock absorber can be easily formed. In addition, because a leak does not occur respectively between the hydraulic oil and the flowable matter in the cavity, reliability of the seal is enhanced.

According to the third embodiment of the present teaching, the flowable matter sealed in the cavity is pressurized.

Consequently, in particular, when the flowable matter is granular fluid, cohesion of each grain in the granular fluid is increased. As a result, the "deformation resistance" in the flowable matter generated by the impact force is more frequently generated, and vibration generated in the shock absorber by the impact force is suppressed more effectively.

According to the fourth embodiment of the present teaching, the flowable matter is granular fluid.

Typically, the granular fluid is sand. Further, the granular fluid can be easily handled, for example, when filled in the cavity. In addition, a desired characteristic can be obtained relatively easily. As a result, since the flowable matter is the granular fluid, the shock absorber can be easily formed.

According to the fifth embodiment of the present teaching, the flowable matter includes at least either substance of granular fluid and liquid having a small absolute specific gravity and granular fluid having an absolute specific gravity larger than that of the preceding substance.

Consequently, when the flowable matter vibrates with the shock absorber due to the impact force, the "deformation resistance" in the flowable matter is further more frequently generated because of difference in inertial force caused by difference in the absolute specific gravity between the substances. As a result, vibration generated in the shock absorber by the impact force is suppressed further more effectively.

According to the sixth embodiment of the present teaching, the flowable matter includes granular fluid, and the granular fluid is made by mixing grains having different grain diameters.

Consequently, a grain having a small grain diameter enters a space generated between grains having a large grain diameter. Therefore, a contact area between these grains and a contact area between an inner surface of the cavity and the flowable matter become larger. As a result, "deformation resistance" in the flowable matter generated by the impact force is further more frequently generated, and vibration generated in the shock absorber by the impact force is suppressed further more effectively.

In addition, when the flowable matter vibrates with the shock absorber due to the impact force, the "deformation resistance" in the flowable matter is further more frequently generated because of difference in inertial force caused by difference between the grain diameters of the grains. As a result, vibration generated in the shock absorber by the impact force is suppressed further more effectively.

According to the seventh embodiment of the present teaching, the flowable matter includes granular fluid, and surface treatment is performed in order to adjust a coefficient of friction of a surface of each grain constituting the granular fluid.

Consequently, an amount of the "deformation resistance" in the flowable matter generated by the impact force can be made to be appropriate. In addition, if rigidity of a surface of each grain is enhanced by the surface treatment, deterioration over time of the flowable matter can be prevented, and improvement of a lifetime is achieved.

According to the eighth embodiment of the present teaching, adsorptive power is generated respectively between components of the flowable matter, or adsorptive power is generated respectively between the flowable matter and an inner surface of the cavity.

Consequently, because adsorptive power is generated respectively between components of the flowable matter and between the flowable matter and an inner surface of the cavity, each friction force is increased. As a result, an amount of the "deformation resistance" in the flowable matter generated by the impact force can be made to be larger.

In addition, when the shock absorber is vibrated, a state of each adsorption due to the adsorptive power and a state of separation in which the state of the adsorption is released by the vibration are repeated. Accordingly, abrupt internal agitation is generated in the flowable matter. Consequently, the "deformation resistance" in the flowable matter is further more frequently generated. As a result, vibration generated in the shock absorber by the impact force is suppressed further more effectively.

According to the ninth embodiment of the present teaching, the flowable matter is incompletely filled in the cavity in order to maintain a space at an upper end of the cavity.

Consequently, when the flowable matter vibrates with the shock absorber due to the impact force, fluidization of the flowable matter in the cavity is promoted by the space provided as described above. As a result, "deformation resistance" in the flowable matter generated by the impact force is more frequently generated, and vibration generated in the shock absorber by the impact force is suppressed more effectively.

## Claims

1. Hydraulic shock absorber (1), comprising:
a cylinder tube (2);
a piston (18) fitted slidably in an axial direction in the cylinder tube (2) for defining an inside of the cylinder tube (2) into first and second chambers (19,20);
a piston rod (21,56) extending from the piston (18) to an outside of the cylinder tube (2); and
a damping force generation section (26,30) capable of generating a damping force by making hydraulic liquid flow between the first and the second chambers (19,20) and being **characterized in that** at least one cavity (38,69) is formed in at least either one of the cylinder tube (2) and the piston rod (21,56), and wherein
flowable matter having a rheological characteristic is sealed in the at least one cavity (38,69).

2. Hydraulic shock absorber according to claim 1, wherein the cavity (38,69) is formed in the piston rod, and an opening which makes it possible to remove the flowable matter from the cavity and to fill the flowable matter into the cavity is formed at an extended end of the piston rod.

3. Hydraulic shock absorber according to claim 1 or 2, wherein the flowable matter sealed in the cavity is pressurized.

4. Hydraulic shock absorber according to claim 1 or 2, wherein the flowable matter is incompletely filled in the cavity in order to maintain a space at an upper end of the cavity.

5. Hydraulic shock absorber according to one of the claims 1 to 4, wherein the flowable matter is granular fluid.

6. Hydraulic shock absorber according to one of the claims 1 to 4, wherein the flowable matter includes at least either substance of granular fluid and liquid having a small absolute specific gravity, together with a granular fluid having an absolute specific gravity larger than that of the preceding substance.

7. Hydraulic shock absorber according to one of the claims 1 to 4, wherein the flowable matter includes granular fluid, and the granular fluid is made by mixing grains having different grain diameters.

8. Hydraulic shock absorber according to one of the claims 1 to 4, wherein the flowable matter includes granular fluid, and surface treatment is performed in order to adjust a coefficient of friction of a surface of each grain constituting the granular fluid.

9. Hydraulic shock absorber according to one of the claims 1 to 8, wherein adsorptive power is generated respectively between components of the flowable matter, or adsorptive power is generated respectively between the flowable matter and an inner surface of the cavity.

## Patentansprüche

1. Hydraulikstoßdämpfer (1), aufweisend:
ein Zylinderrohr (2);
einen Kolben (18), gleitbar eingesetzt in einer axialen Richtung in dem Zylinderrohr (2), um ein Inneres des Zylinderrohrs (2) in eine erste und zweite Kammer (19, 20) zu unterteilen;
eine Kolbenstange (21, 56), die sich vom Kolben (18) nach außen des Zylinderrohrs (2) erstreckt; und
einen Dämpfungskraft- Erzeugungsabschnitt (26, 30), der in der Lage ist, eine Dämpfungskraft durch Herstellen einer Hydraulik- Flüssigkeitsströmung zwischen der ersten und der zweiten Kammer (19, 20) zu erzeugen und der **gekennzeichnet ist dadurch**, dass zumindest ein Hohlraum (38, 69) in zumindest einem von Zylinderrohr (2) oder Kolbenstange (21, 56) gebildet ist, und wobei strömbares Material, das eine rheologische Charakteristik hat, in zumindest einem Hohlraum (36, 69) eingeschlossen sind.

2. Hydraulikstoßdämpfer nach Anspruch 1, wobei der Hohlraum (38, 69) in der Kolbenstange gebildet ist und eine Öffnung, die es möglich macht, das strömbare Material aus dem Hohlraum zu entfernen und das strömbare Material in den Hohlraum zu füllen, an einem sich langstreckenden Ende der Kolbenstange gebildet ist.

3. Hydraulikstoßdämpfer nach Anspruch 1 oder 2, wobei das strömbare Material, verschlossen in dem Hohlraum, unter Druck gesetzt wird.

4. Hydraulikstoßdämpfer nach Anspruch 1 oder 2, wobei das strömbare Material unvollständig in den Hohlraum eingefüllt ist, um einen Raum an einem oberen Ende des Hohlraums beizubehalten.

5. Hydraulikstoßdämpfer nach einem der Ansprüche 1 bis 4, wobei das strömbare Material ein granulares Fluid ist.

6. Hydraulikstoßdämpfer nach einem der Ansprüche 1 bis 4, wobei das strömbare Material zumindest entweder eine Substanz enthält von granularem Fluid oder von flüssigem Fluid, das ein kleines absolutes spezifisches Gewicht hat, gemeinsam mit einem granularem Fluid, das ein absolutes spezifisches Gewicht, größer als das der vorhergehenden Substanz, hat.

7. Hydraulikstoßdämpfer nach einem der Ansprüche 1 bis 4, wobei das strömbare Material granulares Fluid enthält und das granulare Fluid durch Mischen von Körnern mit unterschiedlichen Korndurchmessern hergestellt wird.

8. Hydraulikstoßdämpfer nach einem der Ansprüche 1 bis 4, wobei das strömbare Material granulares Fluid enthält und eine Oberflächenbehandlung ausgeführt wird, um einen Reibungskoeffizienten einer Oberfläche von jedem Korn einzustellen, das das granulare Fluid bildet.

9. Hydraulikstoßdämpfer nach einem von Anspruch 1 bis 8, wobei eine adsorptive Kraft jeweils zwischen Komponenten des strömbaren Materials erzeugt wird, oder eine adsorptive Kraft jeweils zwischen dem strömbaren Material und einer inneren Oberfläche des Hohlraumes erzeugt wird.

## Revendications

1. Amortisseur hydraulique (1) comprenant :
un cylindre (2) ;
un piston (18) monté coulissant dans une direction axiale du cylindre (2) pour définir des première et seconde chambres (19, 20) dans un intérieur du cylindre (2) ;
une tige de piston (21, 56) s'étendant depuis le piston (18) jusqu'à un extérieur du cylindre (2) ; et
une partie de génération de force d'amortissement (26, 30) apte à générer une force d'amortissement en faisant circuler du liquide hydraulique entre les première et seconde chambres (19, 20), et étant **caractérisé en ce qu'**au moins une cavité (38, 69) est formée dans l'un et/ou l'autre du cylindre (2) et de la tige de piston (21, 56), et dans lequel
une matière fluide présentant une caractéristique rhéologique est enfermée de façon étanche dans ladite cavité (38, 69).

2. Amortisseur hydraulique selon la revendication 1, dans lequel la cavité (38, 69) est formée dans la tige de piston, et une ouverture qui rend possible le retrait de la matière fluide hors de la cavité et le remplissage de la matière fluide dans la cavité est formée au niveau d'une extrémité prolongée de la tige de piston.

3. Amortisseur hydraulique selon la revendication 1 ou la revendication 2, dans lequel la matière fluide enfermée de façon étanche dans la cavité est sous pression.

4. Amortisseur hydraulique selon la revendication 1 ou la revendication 2, dans lequel la matière fluide est remplie de façon incomplète dans la cavité afin de maintenir un espace au niveau d'une extrémité supérieure de la cavité.

5. Amortisseur hydraulique selon l'une quelconque des revendications 1 à 4, dans lequel la matière fluide est un fluide granulaire.

6. Amortisseur hydraulique selon l'une quelconque des revendications 1 à 4, dans lequel la matière fluide comprend l'une et/ou l'autre d'une substance parmi un fluide et un liquide granulaires présentant une faible gravité spécifique absolue, conjointement avec un fluide granulaire présentant une gravité spécifique absolue supérieure à celle de la substance précédente.

7. Amortisseur hydraulique selon l'une quelconque des revendications 1 à 4, dans lequel la matière fluide comprend un fluide granulaire, et le fluide granulaire est réalisé par un mélange de grains dont les diamètres sont différents.

8. Amortisseur hydraulique selon l'une quelconque des revendications 1 à 4, dans lequel la matière fluide comprend un fluide granulaire, et un traitement de surface est effectué afin d'ajuster un coefficient de frottement d'une surface de chaque grain constituant le fluide granulaire.

9. Amortisseur hydraulique selon l'une quelconque des revendications 1 à 8, dans lequel une capacité d'adsorption est générée respectivement entre des composants de la matière fluide, ou une capacité d'adsorption est générée respectivement entre la matière fluide et une surface intérieure de la cavité.
